# FASCICULE DE BREVET EUROPEEN

(11) **EP 0 871 787 B1**
(45) Date de publication et mention de la délivrance du brevet: **20.10.1999**
(21) Numéro de dépôt: 96927730.0
(22) Date de dépôt: 02.08.1996
(51) Int. Cl.: C22B 11/00, C22B 7/00, C25C 1/20

(54) **PROCEDE DE TRAITEMENT PAR VOIE ELECTROCHIMIQUE DE SUBSTRATS CATALYSEURS CONTENANT DES METAUX PRECIEUX EN VUE DE LEUR RECUPERATION**
ELEKTROCHEMISCHES VERFAHREN ZUR WIEDERGEWINNUNG VON EDELMETALLEN AUS KATALYSATORSUBSTRATEN
ELECTROCHEMICAL PROCESSING METHOD FOR CATALYST SUBSTRATES CONTAINING NOBLE METALS FOR THE RECOVERY THEREOF

(30) Priorité: 04.08.1995 FR 9509508; 10.11.1995 FR 9513309
(43) Date de publication de la demande: 21.10.1998
(73) Titulaire: RHODIA CHIMIE, 92408 Courbevoie Cédex (FR)
(72) Inventeur: FOGEL, William, F-30100 Ales (FR); MOTTOT, Yves, F-93290 Tremblay-en-France (FR)
(74) Mandataire: Delenne, Marc
(86) Numéro de dépôt international: FR9601231
(87) Numéro de publication internationale: WO9706282

(56) Documents cités:
- EP-A- 0 039 873
- EP-A- 0 221 187
- EP-A- 0 363 314
- EP-A- 0 605 748
- EP-A- 0 607 535
- EP-A- 0 629 712
- DE-C- 4 331 948
- US-A- 4 132 569
- JOURNAL OF METALS (JOM), vol. 40, no. 6, Juin 1988, WARRENDALE, USA, pages 40-44, XP002000920 HOFFMAN: "Recovering platinum-group metals from auto catalysts"

## Description

La présente invention concerne un procédé de traitement pour la récupération des métaux précieux, tels que le platine, le rhodium et/ou le palladium, contenus dans diverses compositions, en particulier des catalyseurs de post-combustion automobile, comprenant une couche d'oxyde(s), ladite couche contenant des métaux précieux et étant déposée sur un support métallique.

Les métaux précieux comme le platine, le rhodium et le palladium sont largement utilisés, seuls ou conjointement, dans de nombreuses compositions industrielles, en particulier des compositions catalytiques, et ceci éventuellement en association avec d'autres éléments de valeur tels que des terres rares, par exemple le cérium.

A titre d'exemples de telles compositions, on peut plus particulièrement citer les catalyseurs dits multifonctionnels (ou catalyseurs "trois voies") et notamment les catalyseurs destinés à traiter et purifier les gaz d'échappement des moteurs à combustion inteme, par exemple des véhicules automobiles (catalyseurs de post-combustion automobile). Ceux-ci, pour des raisons essentiellement liées à la protection de l'environnement, connaissent depuis quelques temps un développement considérable (imposition de normes anti-pollution de plus en plus strictes visant à la réduction des émissions nocives tant des oxydes d'azote et du monoxyde de carbone que des hydrocarbures imbrûlés).

La partie active des catalyseurs de post-combustion automobile, notamment ceux se présentant sous la forme de monolithes, est essentiellement constituée de métaux précieux, comme le platine, le rhodium et/ou le palladium, contenus dans une couche d'oxyde(s), le plus souvent une couche d'alumine et, éventuellement, d'oxyde de cérium. Cette couche d'oxyde(s), y compris les métaux précieux, forme ce que l'on appelle communément un "wash coat" (ou couche de revêtement). Le wash coat est déposé (ou est imprégné) sur un support (ou trame) rigide, qui a, en général, une structure alvéolaire.

Jusqu'à une époque récente, on a employé, comme supports de catalyseurs de post-combustion automobile, essentiellement des supports céramiques, en particulier des supports à base d'une céramique réfractaire telle qu'un silicoaluminate (cordierite par exemple).

Mais les supports céramiques peuvent présenter un certain nombre d'inconvénients. Ainsi, du fait du caractère assez volumineux de cette matière céramique et de son inertie thermique limitant sa vitesse de montée en température, le catalyseur ne devient réellement efficace qu'au bout d'un temps important après le démarrage du moteur. De plus, les supports céramiques sont sensibles aux chocs mécaniques et aux chocs thermiques.

On emploie depuis peu, dans les catalyseurs de postcombustion automobile, des supports métalliques dans une proportion croissante à la place des supports céramiques. Ces supports métalliques offrent plusieurs avantages par rapport aux supports céramiques : ils sont d'abord moins volumineux ; de plus, ils présentent un échauffement plus rapide jusqu'à la température de fonctionnement lors de la phase de démarrage à froid ; enfin, ils possèdent une résistance mécanique plus élevée et une meilleure résistance aux variations de température.

En général, ces supports métalliques sont fixés dans une enveloppe métallique cylindrique munie de conduites de raccord et de conduites d'entrée et de sortie des gaz d'échappement ; cette enveloppe et ces conduites sont la plupart du temps en acier inoxydable ou en un alliage de fer non-magnétique. Ces supports métalliques sont habituellement formés d'un métal ou, le plus souvent, d'un alliage ferromagnétique, notamment à base de fer, chrome et aluminium.

C'est sur la surface de ce support métallique, qui est élevée en elle-même, qu'une suspension de poudre d'oxyde(s) est déposée (ou imprégnée), notamment pour agrandir cette surface et pour protéger de l'oxydation le métal (ou les métaux) du support. Les métaux précieux, comme le platine, le rhodium et le palladium, sont, en général, initialement compris dans la suspension de poudre d'oxyde(s) ou déposés ultérieurement sur la couche d'oxyde(s).

A ce jour, une énorme partie du platine et du rhodium qui sont consommés à l'échelle mondiale est employée pour la préparation de catalyseurs destinés au domaine de la post-combustion automobile. Compte tenu, d'une part, du coût proportionnellement très élevé engendré par le seul emploi de ces métaux précieux par rapport à l'ensemble du catalyseur fini, et, d'autre part, de leur rareté, leur récupération à partir d'un catalyseur usagé ou usé, notamment en vue d'un recyclage pour la préparation d'un catalyseur neuf, constitue aujourd'hui un enjeu stratégique majeur pour les industriels concernés.

La présente invention s'inscrit dans le cadre de cet enjeu.

On connaît de nombreux précédés pour récupérer les métaux précieux contenus dans des catalyseurs de post-combustion automobile usagés, en particulier ceux à supports céramiques. Il s'agit notamment de procédés hydrométallurgiques (ou procédés chimiques humides) ou pyrométallurgiques, effectués généralement après broyage du catalyseur.

Dans certains procédés pyrométallurgiques, utilisés dans le cas des catalyseurs de post-combustion automobile à supports céramiques, le support et son wash coat (contenant les métaux précieux) sont soumis à une fusion, généralement en présence d'un métal collecteur (cuivre, fer, nickel par exemple), la céramique du support étant transformée habituellement en laitier; les métaux précieux, qui se trouvent concentrés dans une phase métallique, peuvent ensuite être extraits par un procédé chimique humide connu. La mise en oeuvre de ces types de procédés pyrométallurgiques dans le cas des catalyseurs de post-combustion automobile à supports métalliques n'est pas réalisable directement, car il ne peut y avoir séparation d'une phase métallique contenant les métaux précieux et d'une phase non métallique, ces catalyseurs étant en quasi-totalité constitué de métaux.

Certains procédés hydrométallurgiques, essentiellement utilisés dans le cas des catalyseurs de post-combustion automobile à supports céramiques, peuvent notamment consister à lixivier (ou traiter en milieu aqueux) le catalyseur (ou la poudre obtenue après broyage), en une ou plusieurs fois, au moyen d'acides minéraux forts tels que l'acide sulfurique, l'acide nitrique ou l'acide chlorhydrique, en présence éventuellement d'un agent oxydant (H₂O₂, Cl₂, HNO₃ ou autre), ce par quoi l'on obtient une ou des solutions de lixiviation contenant sous une forme dissoute les différents métaux précieux recherchés ; ces demiers sont ensuite récupérés à partir de ces solutions par toute technique appropriée et connue en soi, en particulier par précipitation sélective. Toutefois, de tels procédés ont notamment pour inconvénient de présenter, au niveau des différents métaux précieux recherchés (platine, rhodium et palladium) des rendements de solubilisation, et donc de récupération, qui peuvent paraître comme encore insuffisants, et ceci plus particulièrement en ce qui concerne l'espèce rhodium. Un autre procédé hydrométallurgique ne présente pas l'inconvénient précité ; il s'agit du procédé décrit et revendiqué dans la demande de brevet EP-A-0629712, qui met en oeuvre une opération d'empâtage sulfurique (mélange de la composition avec de racide sulfurique + calcination entre 150 et 450 °C) suivie d'une lixiviation avec des ions H⁺ et avec des ions chlorures.

Un autre procédé, décrit dans la demande de brevet EP-A-0 363 314, consiste à traiter électrolytiquement le catalyseur et son support céramique de manière à dissoudre les métaux à récupérer.

Néanmoins, l'application telle quelle de ces procédés hydrométallurgiques au cas des catalyseurs de post-combustion automobile à supports métalliques peut soulever des difficultés. En particulier, les métaux toxiques, tels que le chrome, généralement contenus dans ces supports métalliques, sont alors dissous en compagnie des métaux précieux que l'on cherche à récupérer.

Dans la demande de brevet EP-A-0605748 est décrit un procédé de traitement de catalyseurs à supports métalliques, dans lequel un broyage mécanique du catalyseur est associé à une aspiration des particules de wash coat plus fines et moins denses que le support métallique et à une purification finale par séparation magnétique. Néanmoins, des quantités substantielles de métaux non nobles contenus dans le support métallique sont entraînées avec les métaux précieux du wash coat. Par ailleurs, des particules de wash coat restent piégées sur les fragments métalliques et les rendements de récupération s'en trouvent limités. De plus le dispositif mis en oeuvre peut s'avérer complexe et coûteux notamment sur le plan énergétique.

Le procédé de récupération des métaux du groupe du platine de catalyseurs de post-combustion automobile à supports métalliques proposé dans la demande de brevet DE-A-4331948 comprend une étape de séparation du wash coat du support métallique consistant à traiter le catalyseur dans une cuve à ultrasons. Mais la mise en oeuvre industrielle d'un traitement par ultrasons peut se révéler difficile. Elle peut ne pas conduire au degré de résultat souhaité.

La présente invention a notamment pour but de fournir une altemative efficace aux procédés précédents et de remédier aux problèmes ci-dessus, en proposant un nouveau procédé industriellement rentable qui permette de récupérer, et ceci avec des rendements assez élevés, les différents métaux précieux, en particulier le rhodium, contenus dans diverses compositions, comprenant une couche d'oxyde(s), ladite couche contenant des métaux précieux et étant déposée sur un support métallique, par exemple des catalyseurs de post-combustion automobile à supports métalliques.

Dans ce but, il est maintenant proposé selon la présente invention de séparer la couche d'oxyde(s), contenant lesdits métaux précieux, du support métallique par voie électrochimique, en l'occurrence par électrolyse, la composition (en particulier le catalyseur de post-combustion automobile à support métallique) à traiter formant l'une des électrodes utilisées ou étant en contact direct avec l'une des électrodes utilisées.

Ainsi, l'invention a pour objet un procédé de traitement d'une composition comprenant une couche d'oxyde(s), ladite couche contenant des métaux précieux et étant déposée (ou imprégnée) sur un support (ou trame) métallique, en vue de la récupération desdits métaux précieux, par séparation (a) de la couche d'oxyde(s), contenant les métaux précieux, du support métallique puis, éventuellement, traitement postérieur (b) de la couche d'oxyde(s) contenant les métaux précieux, caractérisé en ce que ladite séparation (a) est obtenue par électrolyse dans une enceinte soumise à un courant électrique et contenant au moins un électrolyte et au moins deux électrodes, l'une desdites électrodes étant formée par la composition à traiter ou étant en contact direct avec la composition à traiter.

Le procédé selon l'invention, qui est d'abord un procédé de décapage électrochimique permettant de séparer le wash coat de son support métallique, avec une solubilisation minimale voire inexistante dudit support, peut permettre une récupération sélective ou globale, et ceci avec des rendements très satisfaisants, des espèces du type métaux précieux.

En particulier, en opérant en voie humide, il permet un rendement supérieur à celui des traitements physiques à sec.

Il peut, de plus, être réalisé en opération continue.

Enfin, la dissolution du support métallique, qui contient généralement des métaux toxiques tels que le chrome, est faible, voire nulle.

D'autres caractéristiques, aspects et avantages de l'invention apparaîtront encore plus clairement à la lecture de la description détaillée qui va suivre, ainsi que des divers exemples destinés à l'illustrer de manière non limitative.

Dans le cadre de la présente invention, l'expression "métaux précieux" s'entend comme désignant et couvrant, pris seuls ou en combinaison, tous les éléments du groupe du platine, c'est-à-dire les éléments rhodium, palladium, iridium, platine, ruthénium et osmium ; plus particulièrement, les métaux précieux sont choisis parmi le platine, le rhodium et le palladium. Par ailleurs, l'expression "éléments de valeur" vise essentiellement des terres rares éventuellement contenues dans la couche d'oxyde(s), c'est-à-dire les éléments de la famille des lanthanides dont le numéro atomique est compris entre 57 et 71, et plus particulièrement le cérium de numéro atomique 58, ainsi que l'yttrium de numéro atomique 39.

Les compositions qui sont traitées au moyen du procédé selon l'invention comprennent une couche d'oxyde(s) déposée (ou imprégnée) sur un support métallique, la couche d'oxyde(s) contenant des métaux précieux.

Ces compositions consistent généralement en des catalyseurs à support métallique, qui peuvent être usés ou usagés, mais aussi des catalyseurs neufs ou relativement neufs correspondants qui constituent par exemple des rebuts de fabrication ou qui ont été détériorés par un accident.

Le procédé selon l'invention vise plus particulièrement le traitement des catalyseurs de post-combustion automobile à supports métalliques. Des tels catalyseurs peuvent par exemple contenir de 4 à 25 %, notamment de 5 à 15 %, en poids de wash coat.

Les catalyseurs à traiter se présentent habituellement sous la forme d'un monolithe, le support métallique ayant en général une structure alvéolaire.

Le support métallique est habituellement formé d'un métal ou d'un alliage métallique ; il est notamment à base de fer, chrome et/ou aluminium. Il est le plus souvent constitué d'un alliage de fer, chrome et aluminium.

La couche d'oxyde(s) (ou wash coat), qui contient les métaux précieux, est en général une couche d'alumine et/ou d'oxyde de cérium. Elle est de préférence à base d'alumine.

On peut noter que les catalyseurs de type usagés ou usés contiennent généralement diverses impuretés, telles que plomb, matières carbonées ou autres ; le procédé selon l'invention est toutefois insensible à la présence de ces impuretés.

Selon l'étape essentielle du procédé de la présente invention, la couche d'oxyde(s), contenant les métaux précieux, est séparée du support métallique en effectuant une électrolyse dans une enceinte dans laquelle est introduit un courant électrique et qui contient au moins un électrolyte et au moins deux électrodes, la composition à traiter formant l'une desdites électrodes ou étant en contact direct avec l'une desdites électrodes.

On désolidarise ainsi le wash coat de son support métallique, afin de récupérer de préférence le wash coat sous forme solide en évitant au maximum toute dissolution dans l'électrolyte.

Il semble, sans que la Demanderesse soit liée par cette théorie, que le support métallique permette par sa présence d'assurer l'absence de dissolution réelle et significative des métaux précieux dans l'électrolyte ; en cas de dissolution d'un des métaux précieux, celui-ci réagirait aussitôt avec le support pour redevenir insoluble (phénomène de cémentation).

La structure et le matériau de l'enceinte dans laquelle est effectuée la séparation peuvent être quelconques. Cette enceinte peut consister en une cellule d'électrolyse.

Même si l'utilisation d'un électrolyte basique, comme la soude, n'est pas exclue de la présente invention, on constate que, en milieu basique, la couche d'oxyde(s) (ou wash coat) se détache lentement et le support métallique subit une certaine dissolution.

Aussi, on emploie de manière avantageuse un électrolyte acide, notamment de pH inférieur à 4, voire à 3.

Le wash coat se détache alors plus rapidement et efficacement du support métallique et on ne constate pas de dissolution significative du support métallique.

En général, l'électrolyte utilisé est une solution aqueuse d'au moins un sel organique ou minéral, notamment un sel de sodium (sulfate ou chlorure de sodium par exemple) ou, de préférence, d'au moins un acide organique ou minéral. De manière très préférée, l'électrolyte utilisé est une solution aqueuse d'au moins un acide minéral, en particulier choisi parmi l'acide sulfurique, l'acide nitrique ou l'acide chlorhydrique. On peut employer en particulier une solution aqueuse d'acide chlorhydrique ayant notamment une normalité comprise entre 0,1 et 2 N.

Une caractéristique essentielle du procédé selon une première variante de l'invention réside dans le fait que l'une des électrodes employées est formée par la composition à traiter, par exemple par le catalyseur usé ou usagé de post-combustion automobile à support métallique.

Une caractéristique essentielle du procédé selon une seconde variante (préférée) de l'invention réside dans le fait que la composition à traiter, par exemple le catalyseur usé ou usagé de post-combustion automobile à support métallique, est en contact direct avec l'une des électrodes employées ; en particulier, la composition à traiter peut alors être fixée à l'une des électrodes, notamment dans son prolongement ; la composition à traiter peut aussi être simplement (dé)posée sur l'une des électrodes.

La polarité de l'électrode formée par la composition à traiter ou en contact direct avec la composition à traiter, c'est-à-dire, dans ce demier cas, la polarité de l'ensemble formé par ladite électrode et la composition à traiter (cet ensemble pouvant être considéré comme une électrode particulière), a une influence très importante sur l'efficacité de la séparation du wash coat du support métallique.

Notamment lorsque l'électrolyte est un électrolyte acide, lors de l'utilisation à la cathode de la composition à traiter (c'est-à-dire lorsque ladite composition forme la cathode ou est en contact direct avec la cathode), le fort dégagement d'hydrogène à cette cathode (première variante) ou au niveau de l'ensemble formé par la cathode et la composition à traiter (seconde variante) ne permet pas toujours de décoller de manière totalement satisfaisante le wash coat de son support métallique.

Par conséquent, même si l'emploi de la composition à traiter à la cathode n'est pas exclue de la présente invention, on utilise de manière très préférée ladite composition à l'anode. Cette mise en oeuvre de la composition à l'anode (c'est-à-dire lorsque la composition forme l'anode ou est en contact direct avec l'anode), en particulier avec un électrolyte acide, se révèle la plus efficace : elle permet de détacher de façon entièrement satisfaisante le wash coat de son support métallique.

Il est à noter que l'utilisation de la composition à traiter alternativement à l'anode et à la cathode, c'est-à-dire l'utilisation alternativement comme anode et comme cathode de l'électrode formée par ladite composition ou se trouvant en contact direct avec ladite composition, peut être envisagée et donne des résultats relativement satisfaisants.

Les électrodes proprement dites (notamment la contre-électrode dans le cas où l'autre électrode est formée par la composition à traiter) peuvent être de tout type approprié. Elles peuvent ainsi être composées de graphite, de carbone, d'acier inoxydable, d'un autre alliage conducteur... L'une d'entre elles peut également être formée par l'enceinte elle-même dans laquelle est effectuée la séparation (a).

La séparation de la couche d'oxyde(s) du support métallique, notamment lorsque la composition à traiter est utilisée à l'anode (c'est-à-dire lorsque l'électrode formée par la composition à traiter ou en contact direct de laquelle se trouve la composition à traiter est l'anode), est généralement d'autant plus efficace que la densité de courant appliquée dans l'enceinte est importante. Cependant, une densité de courant trop excessive peut se traduire par la dissolution simultanée de la composition à traiter (dissolution anodique). La densité de courant appliquée dans l'enceinte est, notamment lorsque la composition à traiter est employée à l'anode, habituellement comprise entre 0,1 et 15 A/dm², de préférence entre 1 et 15 A/dm² et, en particulier, entre 1 et 10 A/dm².

La durée de l'électrolyse mise en oeuvre peut être comprise par exemple entre 5 et 60 minutes, notamment entre 5 et 45 minutes. Elle peut être effectuée sous agitation.

Préalablement à l'étape de séparation, la composition à traiter, notamment lorsqu'elle est constituée par un catalyseur de post-combustion automobile à support métallique, peut subir un prétraitement de conditionnement

Ce prétraitement peut par exemple consister à débarrasser le catalyseur de l'enveloppe métallique l'entourant, et ce en la découpant.

Il peut également résider dans un découpage de manière transversale de l'ensemble formé par le catalyseur et l'enveloppe métallique qui l'entoure.

Il peut aussi éventuellement consister à déchiqueter par cisaillement l'ensemble formé par le catalyseur et ladite enveloppe.

Le prétraitement, qui ne réside pas en général dans un broyage très fin du catalyseur, est habituellement mis en oeuvre pour faciliter l'accessibilité du catalyseur à l'électrolyte.

Après sa séparation du support métallique, le wash coat solide qui se trouve dans l'électrolyte peut être récupéré simplement par toute méthode appropriée ; l'électrolyte contenant le wash coat peut notamment être soumis à une séparation solide/liquide selon tout procédé connu (par exemple une filtration).

Le traitement postérieur (b) de la couche d'oxyde(s) (ou wash coat), qui est une étape optionnelle du procédé selon la présente invention, peut s'effectuer par toute méthode convenable pour récupérer lesdits métaux précieux et, éventuellement, les autres éléments de valeurs, tels que le cérium, contenus dans cette couche d'oxyde(s), en particulier par tout procédé hydrométallurgique (ou procédé chimique humide) ou pyrométallurgique connu.

De manière préférée, le traitement postérieur (b) de la couche d'oxyde(s) est mis en oeuvre selon le procédé décrit et revendiqué dans la demande de brevet EP-A-0629712 dont l'enseignement est incorporé ici à titre de référence. Ce traitement postérieur (b) comprend alors les étapes successives suivantes :
(i) éventuellement, on amène ladite couche d'oxyde(s), contenant les métaux précieux, dans un état finement divisé,
(ii) on mélange celle-ci avec de l'acide sulfurique,
(iii) puis, on calcine, à une température comprise entre 150 et 450 °C, le mélange ainsi obtenu,
(iv) et enfin, on traite en milieu aqueux (lixiviation), de manière simultanée ou séparée, le produit ainsi calciné avec des ions H⁺ d'une part et des ions chlorures d'autre part, ce par quoi l'on obtient finalement, d'une part, un résidu solide substantiellement épuisé en métaux précieux et, éventuellement, en autres éléments de valeurs, et d'autre part, une ou plusieurs solutions contenant les espèces précitées.

La combinaison des étapes (ii) et (iii) ci-dessus correspond à une opération qui est appelée, dans la demande de brevet EP-A-0629712, "empâtage sulfurique".

Selon une première étape facultative (i), on procède à un broyage du wash coat contenant les métaux précieux et, éventuellement, le cérium (ou autres éléments de valeur).

Selon une autre étape facultative, le wash coat, après éventuellement broyage, peut être soumis à un prétraitement thermique conduit sous atmosphère réductrice, par exemple sous un mélange d'argon et d'hydrogène, et ceci à une température généralement comprise entre 300 et 800 °C.

Selon l'étape (ii), la couche d'oxyde(s), éventuellement sous forme de poudre, est ensuite mélangée intimement à de l'acide sulfurique. La quantité d'acide sulfurique, exprimée en H₂SO₄ pur, à utiliser dans cette étape correspond en général à environ de 0,4 à 5 fois la masse de wash coat à traiter, et est de préférence comprise entre 0,5 et 2 fois cette masse, et encore plus préférentiellement entre 0,8 et 1,5 fois cette masse. L'acide sulfurique est le plus souvent mis en oeuvre sous la forme d'une solution, généralement aqueuse, cette dernière étant de préférence relativement concentrée, c'est-à-dire que sa teneur est à plus de 50 % en poids, et encore plus préférentiellement à plus de 80 % en poids, en acide sulfurique. On peut également bien entendu faire appel à des acides sulfuriques dilués dans d'autres solvants ou à de l'acide sulfurique pur.

Après avoir mélangé les produits ci-dessus jusqu'à formation et obtention d'une composition plus ou moins solide qui a en fait le plus souvent l'aspect d'une pâte grisâtre, on procède ensuite à la calcination, généralement sous air, du mélange physique résultant (étape (iii)).

Cette calcination est conduite à une température comprise entre 150 et 450 °C, en particulier entre 200 et 400 °C, et ceci pendant un temps suffisant (qui dépend en particulier de la quantité de wash coat empâté) pour obtenir finalement un solide blanchâtre, friable, appelé ici "sulfates cuits".

Au cours de cette étape, dite d'empâtage sulfurique, des réactions chimiques sont initiées et prennent place dans le mélange à base de wash coat et d'acide sulfurique. En particulier, on observe, d'une part, le dégagement de fumées blanches acides provenant de la décomposition de l'acide sulfurique, et, d'autre part, la transformation des espèces chimiques présentes en sulfates.

Conformément à une autre caractéristique, les métaux précieux, et éventuellement les éléments de valeurs, contenus dans la composition issue de l'étape d'empâtage sulfurique doivent ensuite être lixiviés (étape (iv)).

Cette lixiviation peut être alors opérée selon deux variantes.

Selon la première variante, les sulfates cuits sont tout d'abord lixiviés par une solution acide. Cette première lixiviation, qui est de préférence conduite à une température d'au moins 50 °C, est ensuite suivie d'une filtration permettant ainsi d'obtenir, d'une part, un premier filtrat, et, d'autre part, un premier résidu solide. Ce premier filtrat (solution acide sulfatée) contient alors la majorité du cérium (au moins 70 %) et du rhodium (à peu prés les deux tiers) qui étaient initialement présents dans le wash coat, mais est par contre substantiellement exempt de tout platine. Puis, dans une deuxième étape, on procède à une lixiviation dudit premier résidu au moyen cette fois d'une solution contenant des ions chlorures et, de préférence, un agent oxydant. Après attaque, la suspension résultante est filtrée et conduit ainsi à un deuxième filtrat et un deuxième résidu solide. Cette deuxième lixiviation, qui est de préférence opérée à ébullition de la solution, permet quant à elle de solubiliser et de récupérer dans le deuxième filtrat (solution acide chlorosulfatée) l'essentiel du platine qui était contenu dans le wash coat de départ, ainsi que les quantités restantes de cérium et de rhodium non lixiviées au cours de la première opération. Il convient de noter ici que les premier ou deuxième résidus solides mentionnés ci-dessus peuvent être lavés avec de l'eau ou une solution aqueuse acide de manière à récupérer les jus d'imprégnation et éventuellement les petites quantités de platine ou de rhodium encore adsorbées ; dans ce cas, les eaux de lavage(s) sont alors mélangées aux premier et deuxième filtrats respectivement. Enfin, on notera que le deuxième résidu peut en outre être éventuellement recyclé soit à l'étape d'empâtage, soit à la première étape de lixiviation, soit à la deuxième étape de lixiviation.

Selon une deuxième variante, et qui est ici préférée à la première, les sulfates cuits sont lixiviés au moyen d'une solution acide unique contenant des ions chlorures ainsi que, de préférence, un agent oxydant. Cette lixiviation est de préférence opérée à une température d'au moins 50 °C et, encore plus préférentiellement, à ébullition de la solution.

Dans ce cas, après lixiviation, on obtient une suspension qui est ensuite filtrée, ce par quoi l'on obtient, d'une part, un filtrat qui contient alors tous les métaux précieux ainsi que le cérium qui étaient présents dans le wash coat de départ, et, d'aute part, un résidu d'attaque solide.

Cette seconde variante présente pour avantage, par rapport à la première décrite ci-avant, de permettre la mise en solution simultanée, en une seule étape, et avec de très hauts rendements, des métaux précieux et du cérium.

On notera par ailleurs que toutes les considérations développées dans le cadre de la première variante concernant les possibilités de lavage(s) et/ou de recyclage(s) des résidus d'attaque sont applicables par analogie à la deuxième variante.

A titre d'exemples d'agents oxydants utilisables seuls ou en mélanges, on peut plus particulièrement citer le péroxyde d'hydrogène, l'acide nitrique, le chlore, le persulfate de sodium et l'oxygène.

Les ions chlorures peuvent être, quant à eux, apportés sous la forme d'acide chlorhydrique, de chlore gazeux ou de sels, par exemple des chlorures d'alcalins et/ou d'alcalino-terreux tels que chlorure de sodium, chlorure de potassium, chlorure de calcium, chlorure d'ammonium.

Enfin, l'acidité nécessaire qui est attachée aux solutions de lixiviation à mettre en oeuvre peut être apportée par de nombreux acides, en particulier les acides minéraux forts tels que l'acide sulfurique, l'acide nitrique ou l'acide chlorhydrique. Les concentrations en acide dans les solutions initiales de lixiviation sont alors fixées de manière telle que le pH des solutions directement obtenues après l'étape (deuxième variante) ou les étapes (première variante) de lixiviation soit encore inférieur ou égal à 2, et de préférence inférieur ou égal à 1.

Les métaux précieux, et éventuellement le cérium, contenus dans les solutions issues des étapes de lixiviation décrites ci-avant, peuvent ensuite être récupérés à partir de ces demières par toute technique appropriée et connue en soi, en particulier par précipitation, cémentation, extraction liquide-liquide ou bien encore par échange d'ions, puis éventuellement enfin être purifiés. Les métaux précieux et/ou le cérium ainsi obtenus peuvent alors être réutilisés notamment pour la fabrication de catalyseurs neufs.

Les exemples suivants illustrent l'invention sans toutefois en limiter la portée.

Dans ces exemples, des essais sont réalisés sur un catalyseur de post-combustion automobile de forme monolithe dont la proportion de wash coat (y compris les métaux précieux) par rapport à son support métallique (alliage Fe/Cr/Al) est de 15 % en poids.

Le catalyseur est découpé en tranches de 20 mn d'épaisseur.

On procède alors à des électrolyses dans une cellule d'électrolyse soumise à un courant électrique et contenant un électrolyte. Dans cette cellule d'électrolyse sont plongées deux électrodes, l'une de ces électrodes étant formée par le catalyseur lui-même, l'autre étant en graphite.

Tous les essais sont effectués avec une durée constante de 10 minutes.

On note le rendement de récupération qui est exprimé en pourcentage de masse de wash coat séparé par rapport à la masse théorique initiale de wash coat.

### Exemple 1

On emploie ici divers électrolytes.

La densité de courant appliquée est de 5 A/dm².

Le catalyseur est utilisé comme anode.

On obtient les résultats suivants:

| Electrolyte | HCI 0,1 N | HCl 0,5 N | NaOH 1 N |
|---|---|---|---|
| Rendement | 95 % | 95 % | < 25 % |

Un fort dégagement d'hydrogène est observé à la cathode.

En milieu acide, la solution contenue dans la cellule d'électrolyse reste limpide ; la variation de masse du catalyseur correspond à la masse du solide récupéré en fond de cellule, ce qui indique qu'il n'y a pas de dissolution significative du support métallique.

En milieu basique, on constate que le wash coat se détache plus lentement ; de plus, on observe l'apparition de volutes de rouille caractéristiques de la formation d'hydroxyde ferrique, indiquant ainsi une certaine dissolution du support métallique.

### Exemple 2

L'électrolyte employé est de l'acide chlorhydrique 0,5 N.

Le catalyseur est utilisé comme anode, comme cathode (avec une densité de courant de 5 A/dm²) ou alternativement comme anode et comme cathode en imposant des durées de densités de courant constantes de +/- 5 A/dm² de 1 minute. La durée totale de passage de courant dans les trois cas est toujours de 10 minutes.

On obtient les résultats suivants :

| Catalyseur | Anode | Cathode | Alternatif |
|---|---|---|---|
| Rendement | 95 % | < 10 % | 70 % |

Lors de l'utilisation du catalyseur en cathode, le dégagement important d'hydrogène ne permet pas de désolidariser aussi efficacement le wash coat

### Exemple 3

L'électrolyte employée est de l'acide chlorhydrique 0,5N.

Le catalyseur est utilisé comme anode.

Des densités de courant différentes sont appliquées.

| Densité de courant | 2 A/dm² | 5 A/dm² |
|---|---|---|
| Rendement | 65 % | 95 % |

Dans tous ces exemples, les métaux précieux contenus dans le wash coat peuvent ensuite être récupérés en soumettant ledit wash coat au procédé décrit dans la demande de brevet EP-A-0629712.

## Revendications

1. Procédé de traitement d'une composition comprenant une couche d'oxyde(s), ladite couche contenant des métaux précieux et étant déposée sur un support métallique, en vue de la récupération desdits métaux précieux, par séparation (a) de la couche d'oxyde(s), contenant les métaux précieux, du support métallique, puis, éventuellement, traitement postérieur (b) de la couche d'oxyde(s), contenant les métaux précieux, caractérisé en ce que ladite séparation (a) est obtenue par électrolyse dans une enceinte soumise à un courant électrique et contenant au moins un électrolyte et au moins deux électrodes, ladite composition à traiter étant formée par l'une desdites électrodes ou étant en contact direct avec l'une desdites électrodes.

2. Procédé selon la revendication 1, caractérisé en ce que l'électrolyte est un électrolyte acide.

3. Procédé selon la revendication 1, caractérisé en ce que l'électrolyte est une solution aqueuse d'au moins un sel organique ou minéral ou d'au moins un acide organique ou minéral.

4. Procédé selon l'une des revendications 1 à 3, caractérisé en ce que l'électrode formée par ladite composition à traiter ou au contact direct de laquelle se trouve ladite composition à traiter est l'anode.

5. Procédé selon l'une des revendications 1 à 4, caractérisé en ce que la densité de courant appliquée dans l'enceinte est comprise entre 0,1 et 15 A/dm², de préférence entre 1 et 15 A/dm².

6. Procédé selon l'une des revendications 1 à 3, caractérisé en ce que l'électrode formée par ladite composition à traiter ou au contact direct de laquelle se trouve ladite composition à traiter fonctionne altemativement comme anode et comme cathode.

7. Procédé selon l'une des revendications 1 à 6, caractérisé en ce que le traitement postérieur (b) de la couche d'oxyde(s) contenant les métaux précieux comprend les étapes successives suivantes :
(i) éventuellement, on amène ladite couche d'oxyde(s), contenant les métaux précieux, dans un état finement divisé,
(ii) on mélange celle-ci avec de l'acide sulfurique,
(iii) puis, on calcine, à une température comprise entre 150 et 450 °C, le mélange ainsi obtenu,
(iv) et enfin, on traite en milieu aqueux, de manière simultanée ou séparée, le produit ainsi calciné avec des ions H⁺ d'une part et des ions chlorures d'autre part, ce par quoi l'on obtient finalement, d'une part, un résidu solide substantiellement épuisé en métaux précieux et, éventuellement, en autres éléments de valeurs, et d'autre part, une ou plusieurs solutions contenant les espèces précitées.

8. Procédé selon l'une des revendications 1 à 7, caractérisé en ce que ladite composition est un catalyseur à support métallique.

9. Procédé selon la revendication 8, caractérisé en ce que ledit catalyseur est un catalyseur de post-combustion automobile à support métallique.

10. Procédé selon l'une des revendications 8 et 9, caractérisé en ce que ledit catalyseur est usé ou usagé.

11. Procédé selon l'une des revendications 8 à 10, caractérisé en ce que ledit catalyseur se présente sous la forme d'un monolithe.

12. Procédé selon l'une des revendications 1 à 11, caractérisé en ce que ladite couche d'oxyde(s) est une couche d'alumine et/ou d'oxyde de cérium.

13. Procédé selon l'une des revendications 1 à 11, caractérisé en ce que ladite couche d'oxydes est à base d'alumine.

14. Procédé selon l'une des revendications 1 à 13, caractérisé en ce que lesdits métaux précieux sont choisis parmi le platine, le rhodium et le palladium.

15. Procédé selon l'une des revendications 1 à 14, caractérisé en ce que ledit support métallique est formé d'un métal ou d'un alliage métallique, notamment à base de fer, chrome et/ou aluminium.

## Patentansprüche

1. Verfahren zur Behandlung einer Anordnung, umfassend eine Schicht von Oxid(en), wobei diese Schicht Edelmetalle enthält und auf einem metallischen Träger abgeschieden ist, im Hinblick auf die Rückgewinnung besagter Edelmetalle durch Abtrennung (a) der die Edelmetalle enthaltenden Schicht von Oxid(en) von dem metallischen Träger und anschließend gegebenenfalls Nachbehandlung (b) der die Edelmetalle enthaltenden Schicht von Oxid(en), dadurch gekennzeichnet, daß die besagte Abtrennung (a) durch Elektrolyse in einem Behälter, der einem elektrischen Strom ausgesetzt ist und zumindest einen Elektrolyten und mindestens zwei Elektroden enthält, bewirkt wird, wobei die zu behandelnde Anordnung durch eine der Elektroden gebildet wird oder in direktem Kontakt mit einer der Elektroden steht.

2. Verfahren gemäß Anspruch 1, dadurch gekennzeichnet, daß der Elektrolyt ein sauerer Elektrolyt ist.

3. Verfahren gemäß Anspruch 1, dadurch gekennzeichnet, daß der Elektrolyt eine wässrige Lösung zumindest eines organischen oder anorganischen Salzes oder zumindest einer organischen oder anorganischen Säure ist.

4. Verfahren gemäß einem der Ansprüche 1 bis 3, dadurch gekennzeichnet, daß die Elektrode, die durch besagte zu behandelnde Anordnung gebildet wird oder zu der sich in direktem Kontakt besagte zu behandelnde Anordnung befindet, die Anode ist.

5. Verfahren gemäß einem der Ansprüche 1 bis 4, dadurch gekennzeichnet, daß die in dem Behälter angewandte Stromdichte zwischen 0,1 und 15 A/dm², vorzugsweise zwischen 1 und 15 A/dm², beträgt.

6. Verfahren gemäß einem der Ansprüche 1 bis 3, dadurch gekennzeichnet, daß die Elektrode, die durch die besagte zu behandelnde Anordnung gebildet wird oder zu der sich die besagte zu behandelnde Anordnung in direktem Kontakt befindet, abwechselnd als Anode und als Kathode fungiert.

7. Verfahren gemäß einem der Ansprüche 1 bis 6, dadurch gekennzeichnet, daß die Nachbehandlung (b) der die Edelmetalle enthaltenden Schicht von Oxid(en) die nachstehenden aufeinanderfolgenden Stufen umfaßt:
(i) gegebenenfalls bringt man die die Edelmetalle enthaltende Schicht von Oxid(en) in einen feinteiligen Zustand,
(ii) man mischt diese mit Schwefelsäure,
(iii) anschließend kalziniert man bei einer Temperatur zwischen 150 und 450°C das so erhaltene Gemisch,
(iv) und schließlich behandelt man in wässrigem Milieu gleichzeitig oder getrennt das so kalzinierte Produkt mit H⁺-Ionen einesteils und Chloridionen anderenteils, so daß man schließlich einesteils einen an Edelmetallen und gegebenenfalls an anderen wertvollen Elementen im wesentlichen verarmten festen Rückstand und anderenteils eine oder mehrere die vorgenannten Spezies enthaltende Lösungen erhält.

8. Verfahren gemäß einem der Ansprüche 1 bis 7, dadurch gekennzeichnet, daß die Anordnung ein Katalysator mit metallischem Träger ist.

9. Verfahren gemäß Anspruch 8, dadurch gekennzeichnet, daß der Katalysator ein Katalysator der Kraftfahrzeugnachverbrennung mit metallischem Träger ist.

10. Verfahren gemäß einem der Ansprüche 8 und 9, dadurch gekennzeichnet, daß der Katalysator verbraucht oder gebraucht ist.

11. Verfahren gemäß einem der Ansprüche 8 bis 10, dadurch gekennzeichnet, daß der Katalysator in Form eines Monolithen vorliegt.

12. Verfahren gemäß einem der Ansprüche 1 bis 11, dadurch gekennzeichnet, daß die Schicht von Oxid(en) eine Schicht aus Aluminiumoxid und/oder Ceroxid ist.

13. Verfahren gemäß einem der Ansprüche 1 bis 11, dadurch gekennzeichnet, daß die Schicht der Oxide auf Aluminiumoxid basiert.

14. Verfahren gemäß einem der Ansprüche 1 bis 13, dadurch gekennzeichnet, daß die Edelmetalle unter Platin, Rhodium und Palladium ausgewählt sind.

15. Verfahren gemäß einem der Ansprüche 1 bis 14, dadurch gekennzeichnet, daß der metallische Träger von einem Metall oder einer Metallegierung, insbesondere auf Basis von Eisen, Chrom und/oder Aluminium, gebildet wird.

## Claims

1. Process for the treatment of a composition comprising a layer of oxide(s), the said layer comprising precious metals and being deposited on a metal support, for the purpose of the recovery of the said precious metals, by separation (a) of the layer of oxide(s) comprising the precious metals from the metal support and then, optionally, subsequent treatment (b) of the layer of oxide(s) comprising the precious metals, characterized in that the said separation (a) is obtained by electrolysis in a chamber subjected to an electrical current and comprising at least one electrolyte and at least two electrodes, the said composition to be treated being formed by one of the said electrodes or being in direct contact with one of the said electrodes.

2. Process according to claim 1, characterized in that the electrolyte is an acidic electrolyte.

3. Process according to claim 1, characterized in that the electrolyte is an aqueous solution of at least one organic or inorganic salt or of at least one organic or inorganic acid.

4. Process according to one of claims 1 to 3, characterized in that the electrode formed by the said composition to be treated or in direct contact with which the said composition to be treated is found is the anode.

5. Process according to one of claims 1 to 4, characterized in that the current density applied in the chamber is between 0.1 and 15 A/dm², preferably between 1 and 15 A/dm².

6. Process according to one of claims 1 to 3, characterized in that the electrode formed by the said composition to be treated or in direct contact with which the said composition to be treated is found operates alternately as anode and as cathode.

7. Process according to one of claims 1 to 6, characterized in that the subsequent treatment (b) of the layer of oxide(s) comprising the precious metals comprises the following successive stages:
(i) optionally, the said layer of oxide(s) comprising the precious metals is brought to a finely divided state,
(ii) the layer is mixed with sulphuric acid,
(iii) then the mixture thus obtained is calcined at a temperature of between 150 and 450°C,
(iv) and, finally, the product, thus calcined, is treated in aqueous medium, simultaneously or separately, with H⁺ ions, on the one hand, and chloride ions, on the other hand, whereby, on the one hand, a solid residue substantially exhausted of precious metals and, optionally, of other valuable elements and, on the other hand, one or more solutions comprising the abovementioned species are finally obtained.

8. Process according to one of claims 1 to 7, characterized in that the said composition is a catalyst with a metal support.

9. Process according to claim 8, characterized in that the said catalyst is an automobile afterburning catalyst with a metal support.

10. Process according to either of claims 8 and 9, characterized in that the said catalyst is spent or used.

11. Process according to one of claims 8 to 10, characterized in that the said catalyst is provided in the form of a monolith.

12. Process according to one of claims 1 to 11, characterized in that the said layer of oxide(s) is a layer of alumina and/or of cerium oxide.

13. Process according to one of claims 1 to 11, characterized in that the said layer of oxide(s) is based on alumina.

14. Process according to one of claims 1 to 13, characterized in that the said precious metals are chosen from platinum, rhodium and palladium.

15. Process according to one of claims 1 to 14, characterized in that the said metal support is formed from a metal or from a metal alloy, in particular based on iron, chromium and/or aluminium.
